(19) **Europäisches Patentamt**

**European Patent Office**

**Office européen des brevets**

(11) **EP 1 029 762 B1**

(12) **EUROPÄISCHE PATENTSCHRIFT**

(45) Veröffentlichungstag und Bekanntmachung des Hinweises auf die Patenterteilung:
**29.06.2005 Patentblatt 2005/26**

(51) Int Cl.⁷: **B60T 13/74**

(21) Anmeldenummer: **00102148.4**

(22) Anmeldetag: **07.02.2000**

(54) **Elektromechanische Zuspannvorrichtung für Fahrzeugbremsen und Steuerungsverfahren**

Electromechanical actuator for vehicle brakes and control method

Actionneur électromécanique pour freins de véhicules et méthode de contrôle

(84) Benannte Vertragsstaaten:
**AT BE CH CY DE DK ES FI FR GB GR IE IT LI LU MC NL PT SE**

(30) Priorität: **15.02.1999 DE 19906228**

(43) Veröffentlichungstag der Anmeldung:
**23.08.2000 Patentblatt 2000/34**

(73) Patentinhaber: **KNORR-BREMSE SYSTEME FÜR NUTZFAHRZEUGE GMBH**
**80809 München (DE)**

(72) Erfinder:
• **Laxhuber, Thomas**
**84232 Massing (DE)**
• **Pahle, Wolfgang**
**74080 Heilbronn (DE)**
• **Baumgartner, Hans**
**85368 Moosburg (DE)**

(56) Entgegenhaltungen:
**EP-A- 0 125 870**      **EP-A- 0 531 643**
**DE-A- 4 403 740**

## Beschreibung

Die Erfindung betrifft eine elektromechanische Zuspannvorrichtung einer Fahrzeugbremsen eines Nutzfahrzeugs nach dem Oberbegriff des Anspruches 1. Die Erfindung betrifft ferner ein Verfahren nach dem Oberbegriff des Anspruches 9.

Zum Stand der Technik werden die EP-A-0 531 643 genannt, welche Merkmale des Oberbegriffs des Anspruchs 1 bei einer gattungsfremden Zuspannvorrichtung für Schienenfahrzeugbremsen zeigt, sowie die Dokumente DE-A-44 03 740 und EP-A-0 125 870.

Federspeicher werden hauptsächlich zur Betätigung von Feststellbremsen im Nutzfahrzeugbereich eingesetzt. Prinzipiell existieren zur Zeit verschiedene Methoden zur Fixierung eines Fahrzeugs in der Parkstellung. Bei leichteren Fahrzeugen wird eine Feststellbremswirkung hauptsächlich durch einen reinen Seilzugmechanismus erreicht. Der Fahrer betätigt einen Hebel, an dessen einem Ende ein Seilzug befestigt ist, der an üblicherweise zwei Rädern des Fahrzeugs eine Bremskraft ausüben. Pneumatisch betätigte Federspeicher werden hauptsächlich bei schweren Nutzfahrzeugen eingesetzt, bei denen die benötigte Handkraft für die Feststellbremse vom Fahrer nicht mehr aufgebracht werden kann.

Federspeicherzylinder werden i.allg. derart gebaut, daß beim Entlüften des Zylinders eine Zug- oder Druckwirkung entsteht. Die Betätigungskraft für die Radbremse wird durch eine starke Druckfeder aufgebracht, die sich am Gehäuse des Zylinders abstützt und die Zugkraft über einen Federteller und einen Kugelhalter auf die Kolbenstange überträgt. In seiner Fahrtstellung wird der Zylinder über ein Handbremsventil belüftet. Zum Bremsen wird über das Handbremsventil der Druck im belüfteten Raum gesenkt.

Die Druckfeder zieht entsprechend der Druckabsenkung die Kolbenstange in den Zylinder, wodurch die Radbremse betätigt wird. Der Federraum ist über den Faltenbalg entlüftet.

Neben der pneumatischen Betätigung des Federspeicherzylinders ist insbesondere bei Schienenfahrzeugen auch der Einsatz eines elektromotorischen Antriebes zur Spannung der Feder des Federspeicherzylinders diskutiert worden. Eine derartige Zuspannvorrichtung ist beispielsweise aus der EP 0 129 969 bekannt. Diese Schrift zeigt eine Zuspannvorrichtung für Schienenfahrzeugbremsen, bei welcher die Antriebswelle eines Elektromotors eine Gewindespindel eines Gewindegetriebes antreibt. Die drehbare Gewindespindel ist axial fixiert und trägt eine Kugelumlaufmutter, welche in einem Federteller sitzt, der sich in ein Schubzugrohr fortsetzt, welches mit einem Bremsgestänge zur Betätigung der Bremsbacken einer Scheibenbremse für Schienenfahrzeuge verbunden ist. Das Schubzugrohr wird beim Zuspannen der Bremse von einer Speicherfeder aus dem Gehäuse nach außen gedrückt. Bei Strombeaufschlagung des Elektromotors spannt dieser über den Gewindetrieb die Speicherfeder, welche bei ihrem Zusammenziehen das Schubzugrohr in das Gehäuse zurückzieht und damit die Bremse löst.

Der Elektromotor bzw. die Abtriebsachse des Elektromotors ist im wesentlichen parallel zur Gewindespindel des Gewindetriebes angeordnet, wobei auf der Abtriebswelle des Elektromotors ein Ritzel sitzt, welches ein weiteres auf der Gewindespindel angebrachtes Ritzel antreibt.

Die Erfindung zielt darauf ab, eine elektromechanische Betätigungseinrichtung für Federspeicher bereitzustellen, die es ermöglicht mit geringem Strom- und Kraftbedarf die Federspannung einzustellen und auf einem eingestellten Niveau zu halten. Ferner soll ein einfaches Steuerungsverfahren zur Nutzung der Erfindung geschaffen werden.

Die Erfindung erreicht dieses Ziel in Hinsicht auf die Zuspannvorrichtung durch den Gegenstand des Anspruches 1.

Nutzfahrzeuge kleinerer Bauart besitzen i. allg. keine zusätzlichen Einrichtungen, die Druckluft benötigen, da sie über hydraulische Betriebsbremsen verfügen. Die Druckluft wird nur zur Betätigung der Feststellbremsanlage benötigt. Dies ist ein erheblicher Kostenaufwand, da allein zu diesem Zweck der Einbau von Kompressoren, Luftdruckbehältern, Ventilen etc. vonnöten ist. Dieser Aufwand läßt sich mit der vorgeschlagenen elektromechanischen Lösung einsparen. Auch der Platzbedarf läßt sich mit der vorgeschlagenen modulartigen elektromechanischen Lösung reduzieren, da die elektrischen Steuereinheiten weitaus kleiner sind als vergleichbare hydraulische oder pneumatische.

Dabei sind die Gewindespindel und der Stößel miteinander über eine Langlochverbindung, eine Keilverbindung oder ein elastisches Element verbunden. Es ist ferner auch möglich, die Spindel fliegend mit nur einem Wälzlager zu lagern. Die Lagerung kann insofern als fliegend betrachtet werden, da aufgrund des Spiels in der Verbindung von Stößel und Spindel nur bedingt Kräfte aufgenommen werden. Drückt bzw. zieht die Spindel mit einer Kraft auf die bzw. an der Feder, so bewirkt der Radius im Langloch eine gewisse Zentrierung und eine Lagerkraft an ihr, womit die im Kräftegleichgewicht auftretende statische Unterbestimmtheit der Spindel aufgehoben wird.

Zweckmäßig wird die Halteeinrichtung derart im Kraftübertragungsweg vom Elektromotor zur Feder angeordnet, daß die Kraft zum Halten der gespannten Feder durch die Getriebeübersetzung reduziert ist. Mit der Erfindung ist es auch möglich, durch eine Kombination aus der Motor-Getriebeeinheit und der elektrisch und mechanisch auszulösenden Haltevorrichtung aufgrund der Übersetzung eine Federkraftreduktion zu realisieren. Im Sinne einer kompakten Bauweise wirkt die Haltevorrichtung auf das vordere oder das hintere Ende der Antriebswelle ein.

Das erfindungsgemäße Verfahren ist im Anspruch 9 angegeben. Da bei einer Parkbremsung im Umkehrpunkt einer durch das Mitdrehen des Elektromotors und des Getriebes beim Lösen der Feder bedingten mechanischen Schwingung beim Rückdrehen des Getriebes durch die Feder die Halteeinrichtung einsetzt, wird eine zusätzliche Bremskraft erzeugt wird.

Zweckmäßig wird der Elektromotor dabei dazu genutzt, bei einer Bremsung die Federkraft zu unterstützen und die Geschwindigkeit des Systems und/oder die Bremskraft zu erhöhen. Erreicht das System sein Kräftegleichgewicht oder schwingt es darüber hinaus, so ist durch ein zusätzliches Bestromen des Motors eine weitere Erhöhung der Bremskraft zu erzielen.

Nach einer bevorzugten Variante der Erfindung wird die Haltevorrichtung in Parkstellung bei abgestelltem Fahrzeug ein- oder mehrfach geöffnet, um bei heißgelaufener Bremse auf einfache Weise die Gleichgewichtsstellung der Feststellbremsfunktion einzustellen, während sich die Bremse abkühlt. Wird das Fahrzeug mit heißer Bremse abgestellt, so kann es passieren, daß bei der Abkühlung der Bremse und der damit verbundenen Schrumpfung die Zuspannkraft (u.a. bei Scheibenbremsen) nicht mehr ausreichend ist und das Fahrzeug sich in Bewegung setzen kann. Dies wird mit dieser Variante sicher verhindert.

Bei einer weiteren Variante der Erfindung wird zur Erzielung einer schnellen Reaktion des Systems bei Betriebsbremsungen die Haltebremse außer Kraft gesetzt und die Haltekraft erfolgt durch gesteuerte Bestromung der Motor-Getriebeeinheit.

Es ist nicht zwingend notwendig, daß die Motorachse parallel zur Federachse liegt. Es ergibt sich zwar eine sehr kompakte Anordnung. Alternativ ist es aber denkbar, die Achsen gegeneinander abzuwinkeln (z.B. über ein Schneckengetriebe). Die Arretierung kann reibschlüssig oder formschlüssig wirken. Die Notauslösung kann ferner über einen Seilzug erfolgen oder es wird ein Kondensator derart vorgesehen, daß er im Normalbetrieb aufgeladen ist. Mit Hilfe der Energie dieses Kondensators wird die Arretierung gelöst. Sobald dann der Motor angetrieben wird und damit Strom erzeugt (Generatorwirkung) wird die von ihm abgegebene Energie zum Offenhalten der Magnetbremse genutzt.

Weitere vorteilhafte Ausbildungen der Erfindung sind den übrigen Unteransprüchen zu entnehmen.

Nachfolgend wird die Erfindung anhand von Ausführungsbeispielen unter Bezug auf die Zeichnung näher beschrieben. Es zeigt:

Fig. 1 eine schematische, teilgeschnittene Darstellung eines ersten Ausführungsbeispiels der Erfindung; und

Fig.2 eine Kräftediagramm zur Veranschaulichung des erfindungsgemäßen Steuerverfahrens.

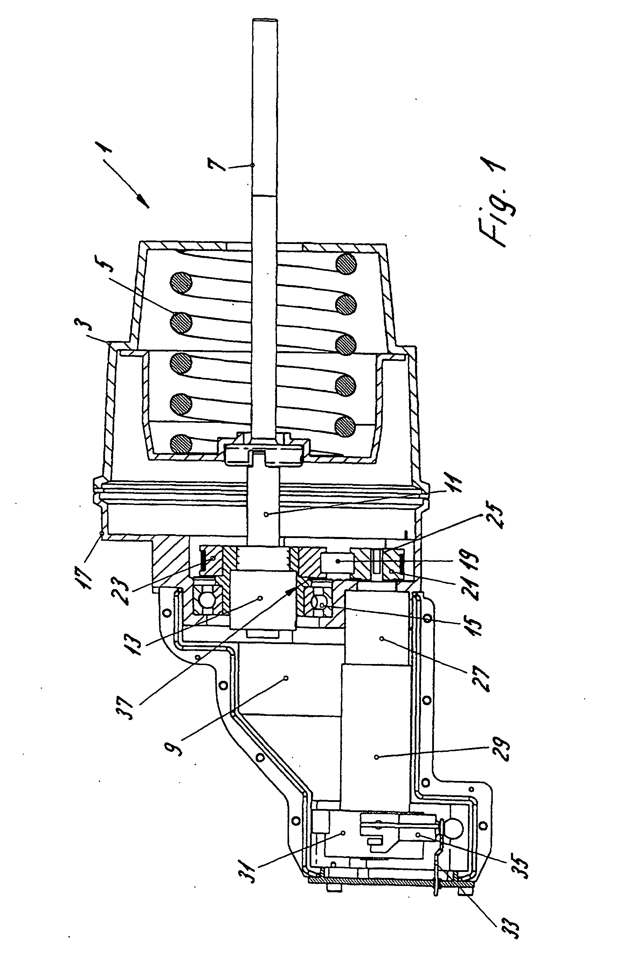

Fig. 1 zeigt einen Federspeicher 1 mit einem ersten Gehäuseabschnitt 3, der eine Feder 5 aufnimmt, die auf eine (hier nicht dargestellte) Bremsanlage über einen Stößel 7 eine Kraft ausübt, um ein Fahrzeug abzubremsen. Zur Aufheben dieser Kraft dient bei Nutzfahrzeugen i.allg. ein Membranzylinder.

Auf dem Federspeicher 1 sitzt eine elektromechanische Auslöseeinheit 9. Zur Ausübung von Kraft auf den Federspeicher 1 dient ein Linearantrieb, der mit Hilfe eines Kugelgewindetriebes realisiert wird (denkbar sind auch Rollengewindetriebe u.ä.). Dazu überträgt die axial verschiebliche Kugelgewindespindel 11 die Kraft auf den Stößel 7, was zum Spannen der Feder 5 führt. Auf der Kugelgewindespindel 11 sitzt eine Spindelmutter 13, die über eine Lagerung 15 in einem zweiten Gehäuseabschnitt 17 fixiert ist. Ein besonderer Vorteil des Antriebs mit einem Kugelgewindetrieb (oder einem Planetengewindetrieb etc.) liegt in dem damit zu erzielenden günstigen Gesamtwirkungsgrad im Vergleich zu hydraulischen oder pneumatischen Lösungen.

Der Antrieb der Spindelmutter 13 erfolgt über einen Zahnriemen(trieb) 19 (denkbar sind auch Kettentriebe, Stirnradgetriebe u.ä.). Vom Zahnritzel 21 wird über den Zahnriemen 19 das Rad 23 angetrieben, welches auf der Spindelmutter 13 sitzt. Das Ritzel 21 ist wiederum auf der Abtriebswelle 25 eines Planetengetriebes 27 (denkbar auch Stirnradgetriebe, Cyclogetriebe u.ä.) befestigt. Das Getriebe 27 ist ebenfalls im Gehäuse 17 fixiert. Der Antrieb des Gesamtsystems wird über einen Elektromotor 29 realisiert.

Um die Bremse in der Fahrstellung halten zu können, ohne den Motor 29 unter Strom zu halten, ist an der Welle des Motors 29 eine mechanisch und elektromagnetisch lösbare Bremse 31 angebracht. Im stromlosen Zustand wird der Motor 29 über einen Federmechanismus in seiner Lage gehalten, was für die gesamte Einheit eine Fixierung bedeutet. Geströmt man die Magnetbremse 31 oder betätigt man mit dem Seilzug 33 die mechanische Lösevorrichtung 35, so kann die Motorwelle in beiden Richtungen frei drehen und die Bremse gelöst bzw. eingelegt werden.

Der gesamte Mechanismus ist so eingestellt, daß zum Entspannen des Federspeichers 1 die Federkraft der Feder 5 ausreicht, d.h. es ist keine Unterstützung durch den Elektromotor 29 notwendig. Lediglich zum Spannen der Feder 5 ist der Motor 29 erforderlich. Das System ist somit selbsthemmungsfrei.

Der Feder 5 gibt ihre Kraft solange an das Gesamtsystem ab, bis sie entweder durch die Wirkung der Magnetbremse 31 wieder gehalten wird oder mit der Federkraft der Bremse im Gleichgewicht steht (Vollbremsung / Parkstellung). In diesem Fall sind jedoch die Massen des Motors 29 und der nachgeschalteten Getriebe (die Gesamtheit der zusammenwirkenden Getriebe trägt das Bezugszeichen 37) auf ihre maximale Drehzahl beschleunigt. Diese kinetische Energie wird in weitere potentielle (Verformungs-) Energie an der Bremse umgesetzt, d. h. die Bremse spannt weiter zu. Sobald diese kinetische Energie vollständig umgewandelt ist, wirkt die Magnetbremse 31 und arretiert die gesamte Anordnung. Es liegt damit eine Art "dynamischer Nachspanneffekt" vor. Dieser Effekt läßt sich verstärken, wenn der Elektromotor 29 am Umkehrpunkt der beginnenden gedämpften harmonischen Schwingung, d.h. vor Einsetzen der Magnetbremse 31 erneut anläuft und die Bremskraft weiter erhöht. Dieser Mechanismus erlaubt es, die Feder 5 kleiner zu dimensionieren, als es allein für die Haltefunktion notwendig wäre. Dies ist ein weiterer bedeutender Vorteil in Hinsicht auf eine weitere Reduzierung des Bauraumes, des Gewichts und der Kosten.

Durch die Magnetbremse 31 kann die Vorrichtung in jeder beliebigen Stellung gehalten werden. Dies führt dazu, daß die Zuspannvorrichtung nicht nur als Parkbremse wirkt sondern durch eine einfache Steuerung auch als Betätigung für die Betriebs-oder Hilfsbremse wirken kann, da die Bremskraft bis zur maximalen Federkraft in beliebiger Höhe aufgebracht werden kann.

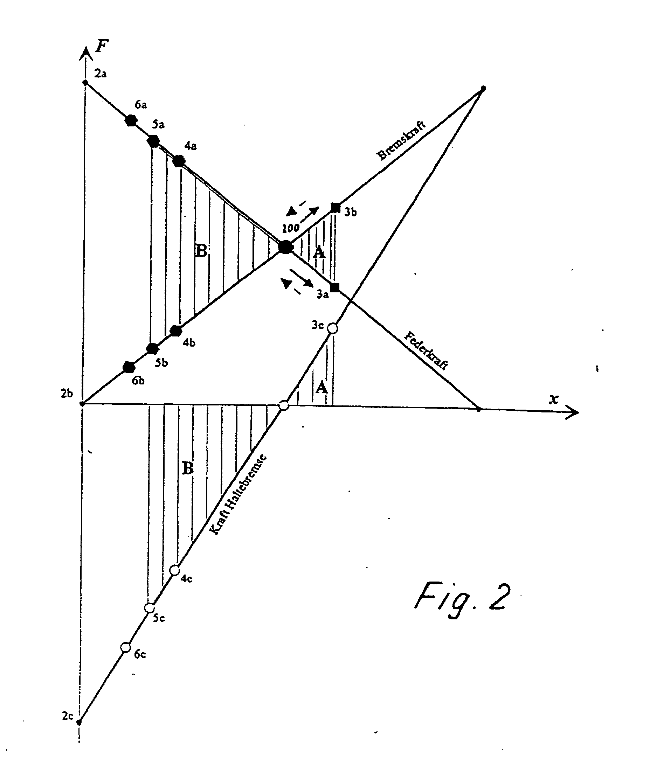

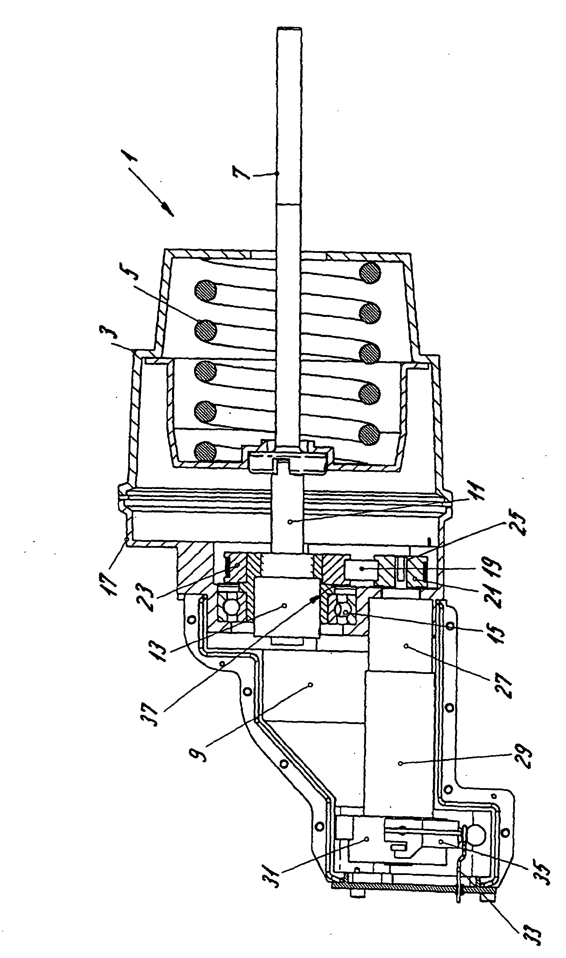

Nachfolgend sei das erfindungsgemäße Steuerverfahren nochmals näher anhand der Fig. 2 näher erläutert.

Die Beaufschlagung einer bestimmten Bremskraft erfolgt unter Abgabe von gespeicherter potentieller Energie der Federspeicherfeder (Federenergie/Fig. 2). Wirkt nun allein die Federkraft und die elastische Kraft der Bremse, so stellt sich ein Kräftegleichgewicht ein (Fig. 2, Punkt 100). Je nach der Größe der Feder 5 und deren Vorspannung ist die Bremskraft größer oder geringer. Dies ist das Verfahrensprinzip einer heutigen Federspeicher-Feststellbremsanlage. Die Erfindung ergänzt dieses Verfahren wie folgt:

A) Wirkung als Parkbremse / Hilfsbremse:

In der Parkstellung (Annahme: Federkraft und Bremskraft im Gleichgewicht, Punkt 100) wird die Haltebremse in Lösestellung (Freigabe) gebracht, und der Federspeicher 1 mit Hilfe des Motors 29 und des Getriebes 37 gespannt (Punkte 2a und 2b). Anschließend wird die Haltebremse wieder auf Sperrstellung geschaltet (2c). Soll die Parkstellung wieder erreicht werden, so wird die Haltebremse geöffnet und die Feder 5 des Federspeichers 1 entspannt sich und setzt das gesamte Motor-Getriebe-System in Bewegung. Gleichzeitig erhöht sich die Kraft an der Bremse. Ist nun der Gleichgewichtspunkt 100 erreicht, so befinden sich die Kräfte der Feder 5 und der Bremse im Gleichgewicht. Da die Drehmassen des Motors 29 und des Getriebes 37 in Bewegung sind, spannt die Trägheit die Bremse weiter zu, resp. entspannt die Feder 5, bis diese Trägheitsmassen vollständig abgebremst sind (Punkte 3a/b). Nun würde das System versuchen, diese Vorspannung wieder abzubauen und sich auf den Gleichgewichtspunkt 100 einzupendeln. Zu diesem Zeitpunkt aber schaltet die Haltebremse auf die Blockierstellung und arretiert das System im vorgespannten Zustand 3a/b. Dies bedeutet, zwischen der Energie der Feder 5 des Federspeichers 1 und der Federenergie der Bremse besteht eine Differenz

$$\int_{3}^{100} (F_{Bremse} - F_{Feder}) dx = A$$

Diese Energie wird von der Haltebremse aufgebracht, um die Vorspannung beizubehalten (Punkt 3c). Der Vorgang läßt sich noch unterstützen, indem der Elektromotor zum Zeitpunkt des Erreichens des oberen Umkehrpunkts 3a/b der Schwingung und vor Schalten der Haltebremse auf die Hemmstellung zusätzlich anläuft und die Vorspannung weiter erhöht.

Tritt der Fall ein, daß das Fahrzeug bei heißen Bremsen abgestellt und die Feststellbremse eingelegt wird, so verschiebt sich das Kraftniveau von 3a/b beim Abkühlen durch das damit verbundene Schrumpfen der Bremse in Richtung Punkt 100. Ist die Vorspannung des Systems groß genug, erreicht es im Normalfall nicht den Punkt 100. Sollte jedoch der Fall eintreten, daß die Bremse so heiß gefahren wurde, daß sich beim Abkühlen das Bremskraftniveau unterhalb Punkt 100 befindet, so wird die gespeicherte Federenergie der Feder 5 wieder größer als die Federenergie der Bremse.

Sollte die Haltebremse in der Hemmstellung bleiben, so kann sich diese Federkraft nicht ausgleichen. Nun wird die Haltebremse gelöst, und der Zustand 100 pendelt sich ein "(nachstellender Federspeicher"). Unter Umständen ist dieser Vorgang mehrmals zu wiederholen.

Aus diesem Funktionsprinzip wird deutlich, daß es ist nicht mehr nötig ist, daß der Fahrer von Hand die Feststellbremse einlegt, dies kann von einem elektronischen System übernommen werden. Für den Fall des Ausfalls dieses Systems existiert die mechanische Auslösevorrichtung 33, die die Haltebremse dauerhaft in Lösestellung fixiert und somit das Kraftniveau am Punkt 100 garantiert wird.

B) Wirkung als Betriebsbremse:

Im Betriebsbremsfall erfolgt die Steuerung ähnlich zur Nutzung als Feststellbremsvorrichtung. Bei vorgespannter Feder 5 (Punkte 2a/b/c) wird die Haltebremse kurz gelöst und bei Erreichen eines gewünschten Bremskraftniveaus (z.B. Punkte (5a/b) in Sperrstellung (5c) geschaltet. Hierbei herrscht ein ähnlicher Energiefall wie bei der Feststellbremse. Die Differenzenergie B aus Federenergie der Feder und Federenergie der Bremse wird von der Haltebremse aufgenommen. Um die Bremskraft zu erhöhen, wird die Haltebremse erneut geöffnet, die Feder entspannt sich und gibt Kraft an die Bremse ab, das entsprechende Niveau wird eingestellt (Punkt 4a/b) und die Haltebremse schließt wieder (4c). Zur Verringerung der Bremskraft (z. B. ABS - Fall) wird ebenfalls die Haltebremse geöffnet, nun dreht aber der Elektromotor und spannt die Feder bis zum gewünschten Kraftniveau (Punkt 6a/b).

Um die Geschwindigkeit des Systems zu erhöhen, ist es im Betriebsbremsfall (v. a. im ABS-Fall) nicht notwendig, daß die Haltebremse in jedem Fall wirkt. Für diesen Fall ist es ausreichend, den Motor unter Strom zu halten, um die gewünschte Haltekraft zu erreichen. Damit ist es möglich, auch sehr kurze Systemreaktionszeiten einzuhalten. Der Motor 29 kann in diesem Fall unterstützend für beide Fälle wirken, d.h. er kann auch mit dem Federspeicher 1 mitdrehen. Dies hilft, die Reaktionszeiten zu verkürzen.

Zum Lösen der Betriebsbremse wird die Haltebremse geöffnet und der Motor dreht das System auf die Positionen 2a/b. Anschließend arretiert die Haltebremse erneut (2c).

Bezugszeichen

| Federspeicher | 1 |
|---|---|
| Gehäuseabschnitt | 3 |
| Feder | 5 |
| Stößel | 7 |
| Auslöseeinheit | 9 |
| Kugelgewindespindel | 11 |
| Spindelmutter | 13 |
| Lagerung | 15 |
| Gehäuseabschnitt | 17 |
| Zahnriemen | 19 |
| Zahnritzel | 21 |
| Rad | 23 |
| Abtriebswelle | 25 |
| Planetengetriebe | 27 |
| Elektromotor | 29 |
| Magnetbremse | 31 |
| Seilzug | 33 |
| Lösevorrichtung | 35 |
| Getriebe | 37 |

**Patentansprüche**

1.  Elektromechanische Zuspannvorrichtung einer Fahrzeugbremse eines Nutzfahrzeugs, die folgendes aufweist:

> a) einen Federspeicherzylinder (1) mit einer von einem Antrieb spannbaren Feder (5) zur Betätigung eines Stößels (7) zum Zuspannen und Lösen der Fahrzeugbremse;
> b) wobei der Antrieb einen Elektromotor (29) und ein dem Elektromotor (29) nachgeschaltetes Getriebe (27, 37) mit einer Spindeleinrichtung (11, 13) zum Spannen der Feder (5) gekoppelt ist;
> c) wobei dem Antrieb eine Haltevorrichtung zum Halten der gespannten Feder (5) zugeordnet ist,
> d) die Haltevorrichtung eine elektromagnetisch betätigbare Bremse (31) aufweist, welche die Kraft zum Halten der Feder (5) erzeugt
> **dadurch gekennzeichnet, daß**
> e) die Bremse (31) als elektromagnetisch betätigbare Scheiben-Federdruckbremse ausgelegt ist, und
> f) die Gewindespindel (11) und der Stößel (7) miteinander über eine Langlochverbindung, eine Keilverbindung oder ein elastisches Element verbunden sind.

2. Elektromechanische Zuspannvorrichtung nach Anspruch 1, **dadurch gekennzeichnet, daß** der Elektromotor (29) und ein Abschnitt des Getriebes (27) modulartig parallel zur Spindeleinrichtung (11, 13) zum Spannen der Feder (5) angeordnet ist.

3. Elektromechanische Zuspannvorrichtung, nach einem der vorstehenden Ansprüche, **dadurch gekennzeichnet, daß** die Spindeleinrichtung (11, 31) als Kugel- oder Rollengewindespindel (11) ausgelegt ist, auf welcher eine Spindelmutter (13) sitzt, die über eine Lagerung (15) in einem Gehäuseabschnitt (17) des Federspeicherzylinders (1) fixiert ist

4. Elektromechanische Zuspannvorrichtung nach einem der vorstehenden Ansprüche, **dadurch gekennzeichnet, daß** das Getriebe (27) ein Planeten-, Stirnrad-, Schnecken- oder Cyclongetriebe umfaßt, in das antriebsseitig die Antriebswelle (25) des Elektromotors (29) eingreift.

5. Elektromechanische Zuspannvorrichtung nach Anspruch 4, **dadurch gekennzeichnet, daß** das Planeten-, Stirnrad-, Schnecken- oder Cyclogetriebe (27) über ein Umschlingungsgetriebe wie einen Zahnriemen (19) oder einen Kettentrieb mit der Spindeleinrichtung (11, 13) gekoppelt ist.

6. Elektromechanische Zuspannvorrichtung nach einem der vorstehenden Ansprüche, **dadurch gekennzeichnet, daß** die Haltevorrichtung derart im Kraflübertragungsweg vom Elektromotor (29) zur Feder (5) angeordnet ist, daß die Kraft zum Halten der gespannten Feder (5) durch die Getriebeübersetzung reduziert ist.

7. Elektromechanische Zuspannvorrichtung nach einem der vorstehenden Ansprüche, **dadurch gekennzeichnet, daß** zur Notauslösung ein Seilzug oder ein aufgeladener Kondensator vorgesehen ist.

8. Elektromechanische Zuspannvorrichtung nach einem der vorstehenden Ansprüche, **dadurch gekennzeichnet, daß** die Achse des Motors parallel oder winklig zur Federachse liegt.

9. Steuerungsverfahren für eine elektromechanische Zuspannvorrichtung einer Fahrzeugbremse eines Nutzfahrzeugs mit einem Federspeicherzylinder (1) mit einer von einem Antrieb spannbaren Feder (5) zur Betätigung eines Stößel (7) zum Zuspannen und Lösen der Fahrzeugbremse, wobei dem Antrieb eine Haltevorrichtung zum Halten der gespannten Feder (5) zugeordnet ist, wobei die Haltevorrichtung eine mechanisch und/oder elektromagnetisch betätigbare Bremse aufweist, welche die Kraft zum Halten der Feder erzeugt,

- wobei durch Betätigung der Haltevorrichtung die Feder (8) beim Erreichen eines vorgegebenen Bremskraftniveaus durch Bestromen des Motors und/oder eine mechanisch wirkende Bremse gebremst und gehalten wird
**dadurch gekennzeichnet, daß**
- bei einer Parkbremsung im Umkehrpunkt eine durch das Mitdrehen des Elektromotors (29) und des Getriebes beim Lösen der Feder (5) bedingten mechanischen Schwingung beim Rückdrehen des Getriebes durch die Feder (5) die Halteeinrichtung einsetzt, so daß eine zusätzliche Bremskraft erzeugt wird.

10. Steuerungsverfahren nach Anspruch 9, **dadurch gekennzeichnet, daß** der Elektromotor (29) derart angesteuert wird, daß er bei einer Bremsung die Federkraft unterstützt und die Bremskraft erhöht.

11. Steuerungsverfahren nach einem der Ansprüche 9 oder 10, **dadurch gekennzeichnet, daß** die Haltevorrichtung ein- oder mehrfach geöffnet wird, um bei heißgelaufener Bremse die Gleichgewichtsstellung der Feststellbremsfunktion einzustellen, während sich die Bremse abkühlt.

12. Steuerungsverfahren nach einem der Ansprüche 9 bis 11, **dadurch gekennzeichnet, daß** zur Erzielung einer schnellen Reaktion des Systems bei Betriebsbremsungen die Haltebremse außer Kraft gesetzt und die Haltekraft durch Bestromung der Motor-Getriebeeinheit erfolgt.

**Claims**

1. Electro-mechanical brake actuator device in a vehicle brake system of a commercial vehicle, comprising:

    (a) a spring-loaded brake cylinder (1) including a spring (5) that can be loaded by a drive system for actuation of a ram (7) for actuating and releasing the vehicle brake;

(b) wherein said drive system is coupled to an electric motor (29) and a gear set (27, 37) downstream of said electric motor (29) with a spindle means (11, 13) for loading said spring (5);

(c) with a holding device being associated with said driving system for holding said loaded spring (5),

(d) while said holding device includes an electromagnetically operable brake (31) that generates the force for holding said spring (5),

**characterised in that**

(e) said brake (31) is configured as electromagnetically operable spring-loaded disk brake, and

(f) said threaded spindle (11) and said ram are connected to each other via a joint by an elongate hole, a keyed joint or a resilient element.

2. Electro-mechanical brake actuator device according to Claim 1, **characterised in that** said electric motor (29) and a section of said gear set (27) are disposed in the manner of a module parallel with said spindle means (11, 13) for loading said spring (5).

3. Electro-mechanical brake actuator device according to any of the preceding Claims, **characterised in that** said spindle means (11, 13) is designed as ball-type or roller-type threaded spindle (11) on which a spindle nut (13) is located that is fixed via a bearing (15) in a housing section (17) of said spring-loaded brake cylinder (1).

4. Electro-mechanical brake actuator device according to any of the preceding Claims, **characterised in that** said gear set (27) comprises a planetary gear set, a cylindrical gear, a worm gear or a cyclone gear set into which the drive shaft (25) of said electric motor (29) engages on the driving side.

5. Electro-mechanical brake actuator device according to Claim 4, **characterised in that** said planetary gear set, said cylindrical gear, said worm gear or said cyclone gear set (27) is coupled to said spindle means (11, 13) via a wrap-type transmission such as a toothed belt (19) or a chain transmission.

6. Electro-mechanical brake actuator device according to any of the preceding Claims, **characterised in that** said holding device is arranged in the power transmission path from said electric motor (29) to said spring (5) in such a way that the power for holding said loaded spring (5) is reduced by the geared transmission.

7. Electro-mechanical brake actuator device according to any of the preceding Claims, **characterised in that** a cable system or a charged capacitor is provided for emergency brake actuation.

8. Electro-mechanical brake actuator device according to any of the preceding Claims, **characterised in that** the axis of said motor is disposed in parallel with or at an angle relative to the spring axis.

9. Control method for an electro-mechanical brake actuator device in a vehicle brake system of a commercial vehicle, comprising a spring spring-loaded brake cylinder (1) including a spring(5) that can be loaded by a drive system for actuation of a ram (7) for actuating and releasing the vehicle brake, wherein a holding device is associated with said driving system for holding said loaded spring (5), while said holding device includes an mechanically and/or electromagnetically operable brake that generates the force for holding said spring (5),

- wherein, in response to actuation of said holding device, said spring (8) is braked and held by power supply to said motor and/or by a mechanically operative brake when a predetermined braking force level is reached, **characterised in that**

- in the event of parking brake application at the point of inversion a mechanical oscillation commences, which is caused by the accompanying rotation of said electric motor (29) and said gear set upon release of said spring (5), when said gear set is rotated in the reverse direction by the spring (5) of said holding device so that an additional braking force is generated.

10. Control method according to Claim 9, **characterised in that** said electric motor (29) is so controlled that it assists the spring force and increases the braking force in the event of brake actuation.

11. Control method according to any of the Claims 9 or 10, **characterised in that** when the brake has become hot said holding device is opened once or several times for adjusting the balanced position of the parking brake function while the brake cools down.

**12.** Control method according to any of the Claims 9 to 11, **characterised in that** the parking brake is rendered inoperative and that the holding force is generated by power supply to the motor/gear set unit so as to achieve a rapid response of the system in the case of service brake actuation.

**Revendications**

**1.** Dispositif électromécanique de serrage d'un frein de véhicule utilitaire, qui comprend ce qui suit :

a) un cylindre (1) d'accumulateur à ressort, ayant un ressort (5) pouvant être tendu par un entraînement pour actionner un poussoir (7) destiné à serrer et desserrer le frein de véhicule ;

b) l'entraînement comprenant un moteur (29) électrique et une transmission (27, 37) montée en aval du moteur (29) électrique, et couplée à un mécanisme (11, 13) à broche destiné à tendre le ressort (5) ;

c) un dispositif de maintien pour maintenir le ressort (5) tendu étant associé à l'entraînement,

d) et le dispositif de maintien comprenant un frein (31) à actionnement électromagnétique, qui produit la force nécessaire pour le maintien du ressort (5),

**caractérisé en ce que**

e) le frein (31) est réalisé sous forme de frein à disque à pression de ressort à actionnement électromagnétique, et

f) la broche (11) filetée et le poussoir (7) sont mutuellement reliés par l'intermédiaire d'une liaison à trou oblong, d'un clavetage ou d'un élément élastique.

**2.** Dispositif électromécanique de serrage suivant la revendication 1, **caractérisé en ce que** le moteur (29) électrique et une partie de la transmission (27) sont disposés de façon modulaire parallèlement au mécanisme (11, 13) à broche destiné à tendre le ressort (5).

**3.** Dispositif électromécanique de serrage suivant l'une des revendications précédentes, **caractérisé en ce que** le mécanisme (11, 13) à broche est réalisé sous forme de broche (11) filetée à billes ou à rouleaux, sur laquelle est monté un écrou (13) de broche (13) qui, au moyen d'un palier (15), est immobilisé dans une partie (17) de boîtier du cylindre (1) d'accumulateur à ressort.

**4.** Dispositif électromécanique de serrage suivant l'une des revendications précédentes, **caractérisé en ce que** la transmission (27) comprend un engrenage planétaire, un engrenage droit, un engrenage à vis sans fin ou un engrenage cycloïdal, dans lequel s'engage côté entraînement l'arbre (25) d'entraînement du moteur (29) électrique.

**5.** Dispositif électromécanique de serrage suivant la revendication 4, **caractérisé en ce que** l'engrenage (27) planétaire, droit, à vis sans fin ou cycloïdal est couplé au mécanisme (11, 13) à broche par l'intermédiaire d'une transmission à enroulement telle qu'une courroie (19) dentée ou qu'une transmission par chaîne.

**6.** Dispositif électromécanique de serrage suivant l'une des revendications précédentes, **caractérisé en ce que** le dispositif de maintien est disposé dans le parcours de transmission de force allant du moteur (29) électrique au ressort (5) de telle sorte que la force nécessaire pour maintenir le ressort (5) tendu est réduite par la démultiplication de la transmission.

**7.** Dispositif électromécanique de serrage suivant l'une des revendications précédentes, **caractérisé en ce qu'**un câble Bowden ou un condensateur chargé est prévu pour le déclenchement de secours.

**8.** Dispositif électromécanique de serrage suivant l'une des revendications précédentes, **caractérisé en ce que** l'axe du moteur est parallèle à l'axe du ressort ou fait un angle avec ce dernier.

**9.** Procédé de commande d'un dispositif électromécanique de serrage d'un frein de véhicule utilitaire comprenant un cylindre (1) d'accumulateur à ressort ayant un ressort (5) pouvant être tendu par un entraînement pour actionner un poussoir (7) destiné à serrer et desserrer le frein de véhicule, un dispositif de maintien pour maintenir le ressort (5) tendu étant associé à l'entraînement et le dispositif de maintien comprenant un frein à actionnement mécanique et/ou électromagnétique, qui produit la force nécessaire pour le maintien du ressort,

- par l'actionnement du dispositif de maintien, le ressort (5) étant, à l'atteinte d'un niveau prescrit de force de freinage, freiné et maintenu par la mise sous tension du moteur et/ou par un frein à action mécanique, **caractérisé en ce que**

- lors d'un freinage de stationnement, au point d'inversion, une oscillation mécanique, produite par la rotation conjointe du moteur (29) électrique et de la transmission lors du desserrage du ressort (5), enclenche lors de la rotation en retour de la transmission, par le ressort (5), le dispositif de maintien, de sorte qu'une force de freinage supplémentaire est produite.

10. Procédé de commande suivant la revendication 9, **caractérisé en ce que** le moteur (29) électrique est asservi de telle sorte que, lors d'un freinage, il assiste la force de ressort et augmente la force de freinage.

11. Procédé de commande suivant la revendication 9 ou 10, **caractérisé en ce que** le dispositif de maintien est ouvert une ou plusieurs fois, afin, lorsque le frein est surchauffé, de régler la position d'équilibre de la fonction de frein de stationnement tandis que le frein se refroidit.

12. Procédé de commande suivant l'une des revendications 9 à 11, **caractérisé en ce que**, afin d'obtenir une réaction rapide du système lors de freinages de service, le frein de maintien est désactivé et la force de maintien est produite par la mise sous tension de l'ensemble moteur-transmission.

Fig. 1

10

Fig. 2